# EUROPÄISCHE PATENTSCHRIFT

(11) **EP 2 066 017 B1**
(45) Veröffentlichungstag und Bekanntmachung des Hinweises auf die Patenterteilung: **01.02.2012**
(21) Anmeldenummer: 08020123.9
(22) Anmeldetag: 19.11.2008
(51) Int. Cl.: H02P 9/10, G01R 19/25, G01R 21/127, G05F 1/70, H02J 3/16, H02J 3/50

(54) **Verfahren zum Betreiben einer Windenergieanlage mit einer spannungsabhängigen Steuerung einer bereitzustellenden elektrischen Blindgröße**
Method of operating a wind energy system with a voltage-dependent control for an electric reactive quantity to be provided
Procédé d' exploitation d'une éolienne comprenant une commande dépendante de la tension& xA;d'une grandeur électrique réactive devant être mise à disposition

(30) Priorität: 01.12.2007 DE 102007057925
(43) Veröffentlichungstag der Anmeldung: 03.06.2009
(73) Patentinhaber: Nordex Energy GmbH, 22848 Norderstedt (DE)
(72) Erfinder: Jurkat, Mark, 22844 Norderstedt (DE); Richter, Kay, 22846 Norderstedt (DE); Harder, Ralf, 22851 Hamburg (DE)
(74) Vertreter: Schildberg, Peter

(56) Entgegenhaltungen:
- EP-A- 1 841 037
- FR-A- 2 823 381
- FR-A- 2 894 087
- JP-A- 2000 014 011

## Beschreibung

Die vorliegende Erfindung betrifft ein Verfahren zum Betreiben einer Windenergieanlage mit einer spannungsabhängigen Steuerung einer bereitzustellenden elektrischen Blindgröße, bei dem ein Sollwert für die elektrische Blindgröße berechnet wird.

Von heutigen Windparks und deren Windenergieanlagen wird verlangt, daß sie spannungsstützend mit dem elektrischen Netz verbunden sind. Es ist daher vorgesehen, dass von den einzelnen Windenergieanlagen und/oder von dem Windpark insgesamt eine spannungsabhängige Blindleistungsbereitstellung erfolgt. Diese wird auch als Automatic Voltage Regulation (AVR) bezeichnet und dient bei Spannungsschwankungen, die sich innerhalb gewisser Bereiche halten, dazu, durch Bereitstellung von Blindleistung und/oder Blindstrom die Spannung im Netz konstant zu halten.

Aus EP 1 282 774 ist ein Verfahren zum Betreiben einer Windenergieanlage mit einem Generator bekannt, der elektrische Leistung für ein elektrisches Versorgungsnetz erzeugt. Bei der Windenergieanlage handelt es sich um eine pitchgeregelte Anlage, deren Leistung abhängig von der Netzfrequenz geregelt und/oder eingestellt wird. Weiterhin ist bekannt, dass, wenn die Netzfrequenz um mehr als 3 ‰ über einem Referenzwert für die Netzfrequenz liegt, die eingespeiste Leistung reduziert wird.

Aus EP 1 386 078 ist es bekannt, den Phasenwinkel in Abhängigkeit vom Betrag einer im Versorgungsnetz erfassten Spannung zu verändern. Hierbei bleibt der Phasenwinkel innerhalb eines Totbandes unverändert. Bei Verlassen des Totbandes wird der Betrag des Phasenwinkels, der den Blindleistunganteil beschreibt, bei ansteigender oder sinkender Spannung erhöht.

Aus EP 1 508 951 A1 ist es bekannt, bei einer Windenergieanlage die bereitzustellende Blindleitung dynamisch abhängig von Parametern der Windenergieanlage anzupassen.

Aus FR 2 823 381 ist eine Toleranzband-Regelung bekannt, bei der ein erhöhter oder verminderter Wert der Blindleistung vorliegt, wenn die Netzspannung außerhalb eines vorbestimmten Toleranzbandes liegt.

Aus EP 1 841 037 A2 ist offenbart eine zentrale Steuerung für einen Windpark, bei der eine im Netzeinspeisepunkt gemessene Blindleistung auf eine Vielzahl von Blindleistungssollwerten für die einzelnen Windenergieanlagen des Windparks aufgeteilt wird.

Der Erfindung liegt die Aufgabe zugrunde, ein Verfahren zum Betreiben einer Windenergieanlage bereitzustellen, bei dem mit einfachen Mitteln wirksam auf Spannungsänderungen durch Bereitstellung einer elektrischen Blindgröße reagiert werden kann.

Erfindungsgemäß wird die Aufgabe durch ein Verfahren mit den Merkmalen nach Anspruch 1 gelöst. Vorteilhafte Ausgestaltungen bilden den Gegenstand der Unteransprüche.

Die Erfindung betrifft ein Verfahren zum Betreiben einer Windenergieanlage mit einer spannungsabhängigen Steuerung einer bereitzustellenden elektrischen Blindgröße. Für die elektrische Blindgröße wird bei dem erfindungsgemäßen Verfahren ein Sollwert berechnet. Das erfindungsgemäße Verfahren geht dabei davon aus, dass für die Netzspannung ein erster oberer Grenzwert und/oder ein erster unterer Grenzwert der Netzspannung definiert ist. Erfindungsgemäß sind also drei Varianten von dem erfindungsgemäßen Verfahren umfasst, die den Fall betreffen, dass (erstens) nur ein erster oberer Grenzwert, (zweitens) nur ein erster unterer Grenzwert und (drittens) sowohl ein erster oberer Grenzwert als auch ein erster unterer Grenzwert definiert sind. Das erfindungsgemäße Verfahren sieht vor, dass, wenn der Istwert der Netzspannung den ersten oberen Grenzwert überschreitet, der Sollwert der elektrischen Blindgröße derart vergrößert oder verkleinert wird, dass der Abweichung des Istwerts der Netzspannung von ihrem Sollwert entgegengewirkt wird. Ebenfalls sieht das erfindungsgemäße Verfahren in den Varianten zwei und drei vor, dass bei einem Unterschreiten des ersten unteren Grenzwerts der Sollwert der elektrischen Blindgröße derart vergrößert oder verkleinert wird, dass der Abweichung des Istwerts der Netzspannung von ihrem Sollwert entgegengewirkt wird. Erfindungsgemäß wird der Sollwert der elektrischen Blindgröße zeitlich fortlaufend weiter vergrößert oder verkleinert, solange der Istwert der Netzspannung den ersten oberen Grenzwert überschreitet oder den ersten unteren Grenzwert unterschreitet. Bei dem erfindungsgemäßen Verfahren wird also mit dem Überschreiten des ersten oberen Grenzwerts und/oder mit dem Unterschreiten des ersten unteren Grenzwerts eine zeitlich fortlaufende Veränderung des Sollwerts der elektrischen Blindgröße in Gang gesetzt. Diese Veränderung hält an, solange die Istwerte der Netzspannung oberhalb oder unterhalb des ersten oberen Grenzwerts bzw. des ersten unteren Grenzwerts liegen.

Erfindungsgemäß wird der Sollwert der elektrischen Blindgröße vergrößert oder verkleinert, bis der Sollwert einen Maximalwert oder einen Minimalwert erreicht hat. Die Änderung des Sollwerts für die elektrische Blindgröße wird beendet, wenn der Sollwert einen vorbestimmten Maximal- oder Minimalwert erreicht hat. Der Vorteil dieser Begrenzung besteht darin, dass, wenn die Windenergieanlage keine netzstützende Funktion entfalten kann, ab einem bestimmten vorgesehenen Maximal- oder Minimalwert eine weitere Erhöhung oder Absenkung der elektrischen Blindgröße unterbrochen wird.

Erfindungsgemäß ist zusätzlich ein zweiter unterer Grenzwert definiert, der kleiner oder gleich dem ersten oberen Grenzwert ist. Wenn der Istwert der Spannung den zweiten unteren Grenzwert unterschreitet, wird der Sollwert der Blindgröße zeitlich fortlaufend vergrößert oder verkleinert, solange bis ein erster vorbestimmter Sollwert für die elektrische Blindgröße erreicht wurde. Analog hierzu ist auch ein zweiter oberer Grenzwert definiert, der größer oder gleich dem ersten unteren Grenzwert ist, wobei dann, wenn der Istwert der Netzspannung den zweiten oberen Grenzwert überschreitet, der Sollwert für die elektrische Blindgröße zeitlich fortlaufend vergrößert oder verkleinert wird, solange bis ein zweiter vorbestimmter Sollwert für die elektrische Blindgröße erreicht wurde. Die zusätzlichen zweiten oberen und unteren Grenzwerte erlauben es, einen Spannungsbereich zu definieren, in dem ein Anheben bzw. ein Absenken auf vorbestimmte Sollwerte für die elektrische Blindgröße möglich sind.

Erfindungsgemäß wird, wenn der Istwert der Netzspannung den ersten oberen Grenzwert wieder unterschreitet oder den ersten unteren Grenzwert wieder überschreitet, der Sollwert für die elektrische Blindgröße auf einen zeitlich konstanten Wert gesetzt. Der zeitlich konstante Wert für die elektrische Blindgröße ist dabei bevorzugt gleich dem aktuellen Sollwert der elektrischen Blindgröße im Zeitpunkt des Wiederüberschreitens des ersten unteren Grenzwerts bzw. des Wiederunterschreitens des ersten oberen Grenzwerts. In dieser Ausgestaltung wird also bei einem Wiedereintritt des Istwerts der Netzspannung in den vom ersten oberen Grenzwert und ersten unteren Grenzwert definierten Bereich der Sollwert für die elektrische Blindgröße auf seinem aktuellen Wert konstant gehalten. Analog zu der vorstehend beschriebenen Ausgestaltung des erfindungsgemäßen Verfahrens, bei der der zeitlich konstante Wert für die Blindgröße vorgesehen ist, ist auch vorgesehen, dass, wenn der Istwert der Netzspannung den zweiten unteren Grenzwert wieder überschreitet und/oder den zweiten oberen Grenzwert wieder unterschreitet, der Sollwert für die elektrische Blindgröße auf einen zeitlich konstanten Wert gesetzt wird. Hierbei kann der zeitlich konstante Wert bevorzugt wieder der aktuelle Sollwert der elektrischen Blindgröße sein.

Im Zusammenhang mit der Bereitstellung von Blindleistung sind verschiedene fachsprachliche Ausdrucksweisen gebräuchlich:

Es kann beispielsweise von der Bereitstellung kapazitiver oder induktiver Blindleistung gesprochen werden, der Einspeisung oder Entnahme von Blindleistung oder von einem übererregten oder untererregten Betrieb. Nachfolgend wird, sofern nicht ausdrücklich anders erwähnt, stets von einer spannungssteigernden Blindleistung bzw. von einer spannungssenkenden Blindleistung gesprochen. Bei der Betrachtung von Windenergieanlagen am Netz haben sich auch unterschiedliche Vorzeichenkonventionen im Zusammenhang mit elektrischen Blindgrößen, sei es nun elektrische Blindleistung oder der elektrische Blindstrom etabliert. Nachfolgend wird ein positives Vorzeichen für spannungssteigernde Blindleistung und ein negatives Vorzeichen für spannungssenkende Blindleistung eingesetzt.

In einer bevorzugten Weiterführung des erfindungsgemäßen Verfahrens ist der erste obere Grenzwert der Netzspannung größer als der Sollwert oder gleich dem Sollwert für die Netzspannung. Ebenfalls ist der erste untere Grenzwert der Netzspannung kleiner oder gleich dem Sollwert der Netz-spannung. Erster oberer und unterer Grenzwert liegen also bevorzugt oberhalb bzw. unterhalb des Sollwerts für die Netzspannung.

In einer bevorzugten Ausgestaltung sind die vorbestimmten Sollwerte für die erste und die zweite elektrische Blindgröße gleich, besonders bevorzugt besitzen beide Sollwerte den Wert Null. In dieser Ausgestaltung findet also bei einem Unterschreiten des zweiten unteren Grenzwerts eine Rückführung des Sollwerts für die elektrische Blindgröße auf den Wert Null statt. Mit Einführung des zweiten oberen und unteren Grenzwerts kann eine zumindest stückweise stetige Regelung vorgenommen werden.

In einer bevorzugten Ausgestaltung des erfindungsgemäßen Verfahrens ist der zweite obere Grenzwert der Netzspannung kleiner oder gleich dem ersten oberen Grenzwert der Netzspannung. Ebenso ist der zweite untere Grenzwert der Netzspannung bevorzugt größer oder gleich dem ersten unteren Grenzwert der Netzspannung.

Dem Fachmann ist allgemein geläufig, dass es mehrere Möglichkeiten der Darstellung von elektrischen Blindgrößen gibt:

Blindleistung, Blindstrom, Phasenwinkel oder Leistungsfaktor.

Ebenfalls ist dem Fachmann allgemein bekannt, dass zur Bereitstellung und Beeinflussung einer elektrischen Blindgröße auf eine Steuerung des

Generators und/oder des Umrichtersystems und/oder des Phasenschiebersystems abgestellt werden kann.

In einer bevorzugten Ausgestaltung des erfindungsgemäßen Verfahrens sind die Grenzwerte bezogen auf den Sollwert für die Netzspannung einstellbar.

Das erfindungsgemäße Verfahren wird nachfolgend an einem Beispiel näher erläutert. Es zeigt:
- Fig. 1: eine Darstellung der Sollwertbestimmung für die Blindleistung abhängig von der gemessenen Spannung,
- Fig. 2: eine Darstellung einer alternativen Sollwertbestimmung für die Blind- leistung abhängig von der gemessenen Spannung,
- Fig. 3: einen beispielhaften Verlauf der Spannung und des Sollwertes der Blindleistung über der Zeit,
- Fig. 4 und 5: Darstellungen weiterer alternativer Sollwertbestimmungen für die Blindleistung abhängig von der gemessenen Spannung, und
- Fig. 6: eine Darstellung der Sollwertbestimmung nach Fig. 1 mit anderer Vorzeichenwahl.

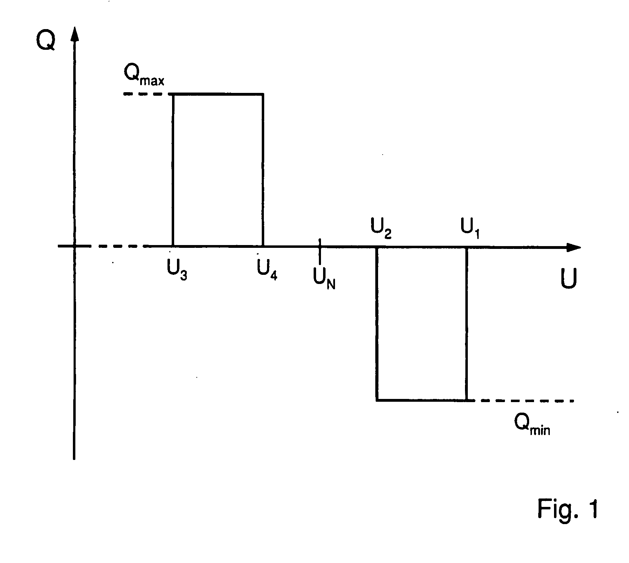

Fig. 1 zeigt auf der Abszisse die Werte für die Netzspannung U, wobei U_{N} einen Sollwert für die Netzspannung andeutet. Entlang der Ordinate sind Werte für die Blindleistung Q aufgetragen, wobei oberhalb der Abszisse eine spannungssteigernde Blindleistung und unterhalb der Abszisse eine spannungssenkende Blindleistung aufgetragen ist.

Bei einem Ansteigen der Netzspannung greift das erfindungsgemäße Regelverfahren bis zum Erreichen des ersten oberen Grenzwertes U₁ nicht ein und verändert nicht den aktuellen Sollwert für die Blindleistung. Erst wenn der Grenzwert U₁ überschritten wird, erfolgt eine Absenkung des Blindleistungssollwertes, d.h. es wird spannungssenkende Blindleistung bereitgestellt. Der Blindleistungssollwert wird zeitlich nachfolgend solange immer weiter abgesenkt, bis entweder ein Grenzwert der Blindleistung Qₘᵢₙ erreicht ist oder bis der Grenzwert der Spannung U₁ wieder unterschritten wird. Der Sollwert der Blindleistung wird also ab dem Zeitpunkt, zu dem der Grenzwert U₁ überschritten wird, entsprechend der Dauer des Überschreitens des Grenzwertes U₁ immer weiter abgesenkt, wobei das Absenken des Sollwertes beispielsweise mit einem konstanten Betrag pro Zeiteinheit erfolgen kann: dQ/dt = const. Wenn ein Grenzwert der Blindleistung Qₘᵢₙ erreicht wird, so wird ab diesem Zeitpunkt der Sollwert für die Blindleistung auf diesem Wert konstant gehalten, wie in Fig. 1 durch den gestrichelten Abschnitt bei Qₘᵢₙ angedeutet.

Wenn die Netzspannung den Grenzwert U₁ wieder unterschreitet, so wird der Sollwert für die Blindleistung wieder konstant gehalten, und zwar auf dem bis zu diesem Zeitpunkt erreichten Sollwert.

Erst wenn die Netzspannung auch den zweiten unteren Grenzwert U₂ unterschreitet, wird der Sollwert für die Blindleistung wieder erhöht, und zwar ab dem Zeitpunkt des Unterschreitens des Grenzwertes U₂, entsprechend der Dauer des Unterschreitens des Grenzwertes U₂. Der Sollwert der Blindleistung wird solange weiter erhöht, bis ein vorgegebener Blindleistungssollwert, beispielsweise Null, erreicht wurde oder bis durch ein erneutes Ansteigen der Netzspannung der Grenzwert U₂ wieder überschritten wird. Danach wird der Blindleistungssollwert wieder konstant gehalten, und zwar auf dem bis zu diesem Zeitpunkt erreichten Sollwert.

Bei einem Absinken der Netzspannung greift das erfindungsgemäße Regelverfahren bis zum Erreichen des ersten unteren Grenzwertes U₃ nicht ein und verändert nicht den aktuellen Sollwert für die Blindleistung. Erst wenn der Grenzwert U₃ unterschritten wird, erfolgt eine Erhöhung des Blindleistungssollwertes, d.h. es wird spannungssteigernde Blindleistung bereitgestellt. Der Blindleistungssollwert wird solange immer weiter erhöht, bis entweder ein Grenzwert der Blindleistung Qₘₐₓ erreicht ist oder bis der Grenzwert der Spannung U₃ wieder überschritten wird. Der Sollwert der Blindleistung wird also ab dem Zeitpunkt, zu dem der Grenzwert U₃ unterschritten wird, entsprechend der Dauer des Unterschreitens des Grenzwertes U₃ immer weiter erhöht, wobei das Erhöhen des Sollwertes beispielsweise mit einem konstanten Betrag pro Zeiteinheit erfolgen kann: dQ/dt = const. Wenn ein Grenzwert der Blindleistung Qₘₐₓ erreicht wird, so wird ab diesem Zeitpunkt der Sollwert für die Blindleistung auf diesem Wert konstant gehalten, wie in Fig. 1 durch den gestrichelten Abschnitt bei Qₘₐₓ angedeutet.

Wenn die Netzspannung den Grenzwert U₃ wieder überschreitet, so wird der Sollwert für die Blindleistung wieder konstant gehalten, und zwar auf dem bis zu diesem Zeitpunkt erreichten Sollwert.

Erst wenn die Netzspannung auch den zweiten oberen Grenzwert U₄ überschreitet, wird der Sollwert für die Blindleistung wieder abgesenkt, und zwar ab dem Zeitpunkt des Überschreitens des Grenzwertes U₄, entsprechend der Dauer des Überschreitens des Grenzwertes U₄. Der Sollwert der Blindleistung wird solange weiter gesenkt, bis ein vorgegebener Blindleistungssollwert, beispielsweise Null, erreicht wurde oder bis durch ein erneutes Absinken der Netzspannung der Grenzwert U₄ wieder unterschritten wird. Danach wird der Blindleistungssollwert wieder konstant gehalten, und zwar auf dem bis zu diesem Zeitpunkt erreichten Sollwert.

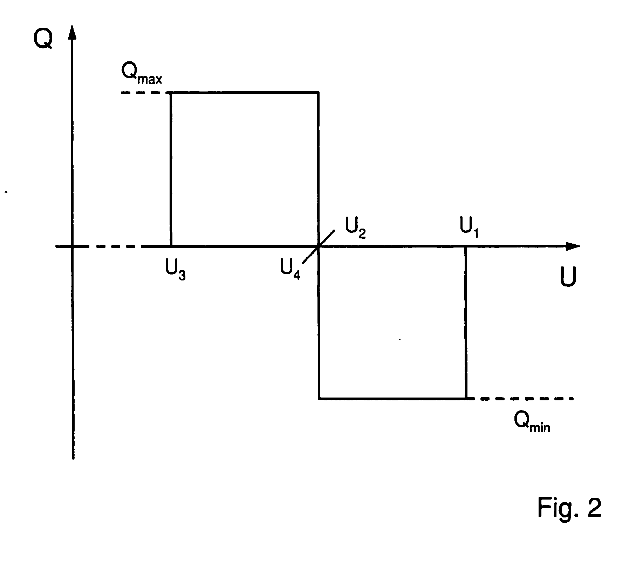

Fig. 2 zeigt eine alternative Ausführung des Verfahrens, bei dem die Grenzwerte U₂ und U₄ gleich sind. Die Lage des Sollwertes Nennspannung U_{N} ist hier nicht angegeben, er kann innerhalb des Intervalls zwischen U₃ und U₁ an irgendeiner Stelle liegen und muss mit U₂ bzw. U₄ nicht übereinstimmen.

Angenommen, es sei ein Sollwert der Blindleistung unterhalb der Abszisse (= spannungssenkende Blindleistung) eingestellt und die Netzspannung sinke aus dem Intervall zwischen U₂ und U₁ kommend unter den Grenzwert U₂ ab, dann wird der Sollwert der Blindleistung erhöht, bis der Vorgabewert (beispielsweise Null) erreicht ist, und wird dann auf diesem Vorgabewert konstant gehalten. Erst wenn bei einem weiteren Absinken der Netzspannung der Grenzwert U₃ unterschritten wird, wird der Sollwert der Blindleistung weiter erhöht.

Entsprechend wird im umgekehrten Fall, dass ein Sollwert der Blindleistung oberhalb der Abszisse eingestellt ist (= spannungssteigernde Blindleistung) und die Netzspannung aus dem Intervall zwischen U₃ und U₄ kommend weiter über U₄ ansteigt, der Sollwert der Blindleistung zunächst abgesenkt, bis der Vorgabewert (beispielsweise Null) erreicht ist, und danach konstant gehalten. Erst wenn bei einem weiteren Ansteigen der Netzspannung der Grenzwert U₁ überschritten wird, wird der Sollwert der Blindleistung weiter abgesenkt.

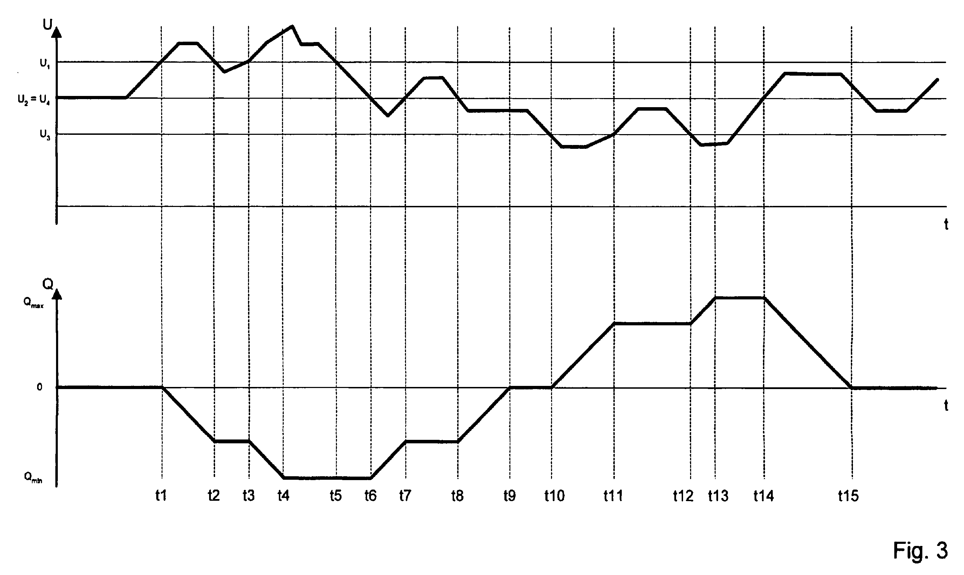

Das dargestellte Konzept lässt sich an Fig. 3 einfach verdeutlichen. Der obere Teil der Fig. 3 zeigt einen beispielhaften Spannungsverlauf über der Zeit. Zu erkennen sind der erste obere Grenzwert der Spannung U₁, der erste untere Grenzwert der Spannung U₃ und die zweiten Grenzwerte U₂ und U₄, wobei U₂ = U₄ gewählt wurde. Dies entspricht also der Darstellung aus Fig. 2.

Der untere Teil der Fig. 3 zeigt den entsprechenden Verlauf des Sollwertes der Blindleistung Q über der Zeit, der sich nach dem erfindungsgemäßen Verfahren ergibt. Zu erkennen sind der Vorgabewert Null, der obere Grenzwert Qₘₐₓ und der untere Grenzwert Qₘᵢₙ.

Im Zeitintervall zwischen dem Koordinatenursprung und dem Zeitpunkt t₁ steigt die Spannung allmählich an und erreicht zum Zeitpunkt t₁ den ersten oberen Grenzwert U₁. Wie im unteren Teil des Diagramms in Fig. 3 zu erkennen, bleibt der Sollwert der Blindleistung bis zum Zeitpunkt t₁ konstant auf dem Wert Null. Ab dem Zeitpunkt t₁ bis t₂ überschreitet die Spannung den ersten oberen Grenzwert U₁ und erfindungsgemäß wird der Sollwert der Blindleistung Q mit der Zeit abgesenkt, solange die Spannung den Grenzwert U₁ überschreitet. Das lineare Abfallen des Sollwertes für die Blindleistung Q ergibt sich daraus, dass eine zeitlich konstante Sollwertabnahme definiert ist, wie in der Beschreibung zu Fig. 1 oben dargestellt. Grundsätzlich sind nichtlineare Formen bei der Sollwertabnahme und/oder -zunahme möglich. So ist beispielsweise auch möglich, die Sollwertänderung proportional zur Spannungsabweichung auszubilden, dQ/dt ~ (U_{N} - Uᵢₛₜ).

Im Zeitintervall von t₂ bis t₃ unterschreitet die Spannung den oberen Grenzwert U₁, in diesem Zeitintervall wird der Sollwert der Blindleistung Q auf dem Wert konstant gehalten, der bis zu dem Zeitpunkt t₂ erreicht wurde. Ab dem Zeitpunkt t₃ überschreitet die Spannung wieder den oberen Grenzwert U₁ und es erfolgt wieder eine zeitlich konstante Absenkung des Sollwertes für die Blindleistung Q. Im Zeitpunkt t₄ ist der Grenzwert der Blindleistung Qₘᵢₙ erreicht, ab diesem Zeitpunkt wird der Sollwert der Blindleistung Q nicht weiter abgesenkt, sondern auf dem Wert Qₘᵢₙ konstant gehalten, obwohl die Spannung weiterhin über dem oberen Grenzwert U₁ liegt und zeitweise sogar noch weiter ansteigt. Zum Zeitpunkt t₅ unterschreitet die Spannung wieder den oberen Grenzwert U₁, der Sollwert der Blindleistung wird weiterhin auf dem bis dahin erreichten Wert Qₘᵢₙ konstant gehalten. Zum Zeitpunkt t₆ unterschreitet die Spannung den zweiten unteren Grenzwert U₂, deshalb wird der Sollwert der Blindleistung Q wieder mit der Zeit erhöht. Zum Zeitpunkt t₇ wird der untere Grenzwert U₂ wieder überschritten und der Sollwert der Blindleistung Q auf dem bis dahin erreichten Wert konstant gehalten. Ab dem Zeitpunkt t₈ wird der untere Grenzwert U₂ wieder unterschritten, deshalb wird der Sollwert der Blindleistung Q weiter erhöht, bis zum Zeitpunkt t₉ der Vorgabewert Null erreicht ist. Ab diesem Zeitpunkt wird der Sollwert der Blindleistung Q auf dem Vorgabewert Null konstant gehalten.

Ab dem Zeitpunkt t₁₀ unterschreitet die Spannung den ersten unteren Grenzwert U₃, deshalb wird der Sollwert der Blindleistung Q mit der Zeit erhöht. Von t₁₁ bis t₁₂ kehrt die Spannung in den Bereich zwischen den Grenzwerten U₃ und U₄ zurück, so dass in diesem Zeitintervall der Sollwert der Blindleistung Q auf dem zum Zeitpunkt t₁₁ erreichten Wert konstant gehalten wird. Ab t₁₂ unterschreitet die Spannung wieder den unteren Grenzwert U₃, deshalb wird der Sollwert der Blindleistung Q weiter erhöht, bis zum Zeitpunkt t₁₃ der Grenzwert Qₘₐₓ der Blindleistung erreicht ist. Ab t₁₃ wird der Sollwert der Blindleistung solange konstant gehalten, bis zum Zeitpunkt t₁₄ der obere Grenzwert der Spannung U₄ wieder überschritten wird. Ab t₁₄ wird deshalb der Sollwert der Blindleistung Q wieder mit der Zeit abgesenkt und erreicht zum Zeitpunkt t₁₅ den Vorgabewert Null, auf dem er ab t₁₅ wieder konstant gehalten wird.

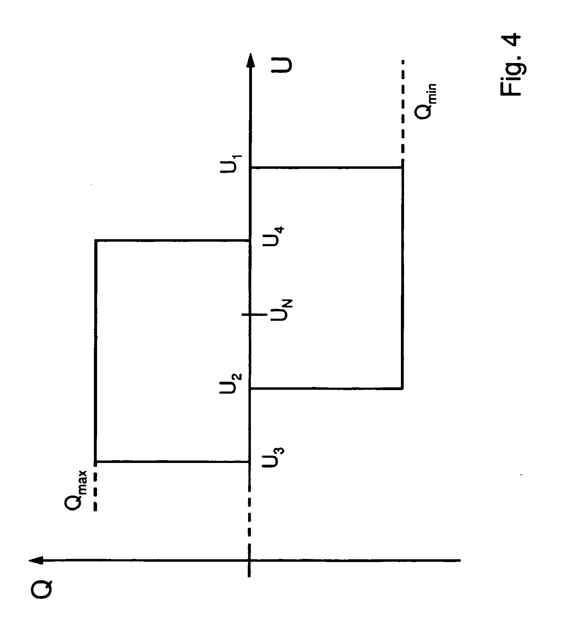

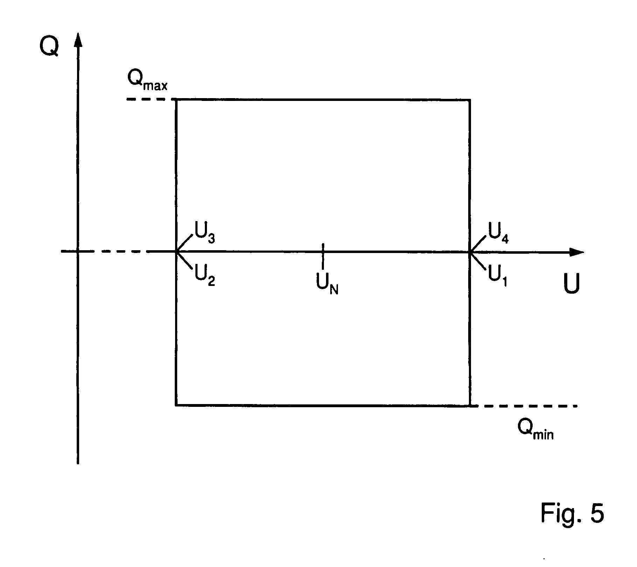

Weitere Variationen des Verfahrens sind in Fig. 4 und 5 dargestellt. Fig. 4 zeigt einen Fall, bei dem die Intervalle zwischen U₂ und U₁ bzw. zwischen U₃ und U₄ einander teilweise überlappen.

Fig. 5 zeigt den Fall, dass die beiden Intervalle einander vollständig überlappen. Hierbei wird im gesamten Intervall zwischen U₃ und U₁ der Sollwert der Blindleistung konstant gehalten und erst beim Überschreiten von U₁ bzw. Unterschreiten von U₃ setzt eine Veränderung des Sollwertes der Blindleistung ein.

Die Figuren 1, 2, 4 und 5 zeigen somit verschiedene Beispiele, wie durch Veränderung der Grenzwerte für die Spannung U₁...U₄ eine Anpassung des Verfahrens an unterschiedliche Standort- und Netzbedingungen möglich ist. In der täglichen Praxis wird man das Verfahren in solcher Weise implementieren, dass man die Grenzwerte U₁...U₄ durch Änderung von Betriebsparametern der Windenergieanlage einfach verändern kann oder dass die Grenzwerte entsprechend dem Sollwert der Netzspannung U_{N} verschoben werden.

In gleicher Weise ist durch Veränderung der Grenzwerte für die Blindleistung, Qₘᵢₙ und Qₘₐₓ, eine einfache Anpassung des Verfahrens möglich. Zur besseren Ausschöpfung der technischen Leistungsfähigkeit der Windenergieanlage ist es weiterhin sinnvoll, dass die Grenzwerte Qₘᵢₙ und Qₘₐₓ entsprechend der momentanen Wirkleistungsabgabe und/oder Leistungsreserve der Windenergieanlage im laufenden Betrieb angepasst werden. Ein geeignetes Verfahren ist beispielsweise in EP 1 508 951 beschrieben.

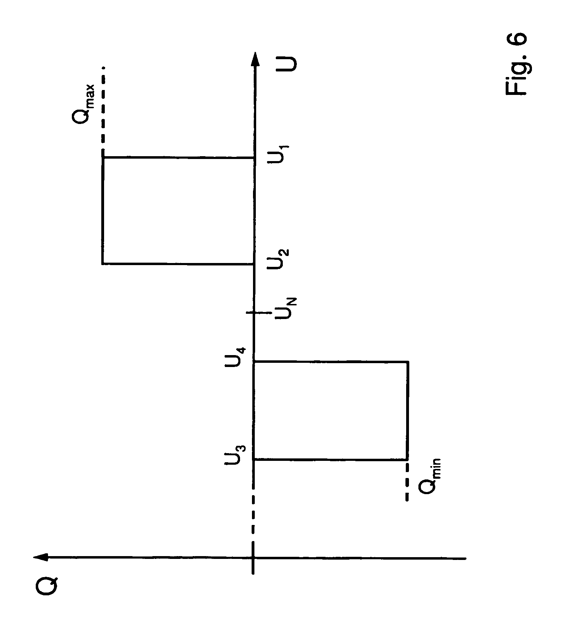

Fig. 6 illustriert das Verfahren entsprechend Fig. 1 für den Fall, dass die Vorzeichenkonventionen anders gewählt sind, nämlich in der Weise, dass Blindleistung oberhalb der Abszisse spannungssenkend wirkt und Blindleistung unterhalb der Abszisse spannungssteigernd wirkt.

## Patentansprüche

1. Verfahren zum Betreiben einer Windenergieanlage, mit einer Steuerung einer bereitzustellenden elektrischen Blindgröße, bei dem ein Sollwert für die elektrische Blindgröße folgendermaßen ermittelt wird:
- für die Netzspannung sind ein erster oberer und/oder ein erster unterer Grenzwert (U1, U3) der Netzspannung definiert, ferner sind ein zweiter unterer Grenzwert (J2), der kleiner oder gleich dem ersten oberen Grenzwert (U1) ist und/oder ein zweiter oberer Grenzwert (U4) definiert, der größer oder gleich dem ersten unteren Grenzwert (U3) ist,
- wenn der Istwert der Netzspannung den ersten oberen Grenzwert (U1) überschreitet oder der Istwert der Netzspannung den ersten unteren Grenzwert (U3) unterschreitet, wird der Sollwert der elektrischen Blindgröße derart vergrößert oder verkleinert, dass der Abweichung des Istwerts der Netzspannung von ihrem Sollwert entgegengewirkt wird,
- der Sollwert der elektrischen Blindgröße wird zeitlich fortlaufend weiter vergrößert oder verkleinert, solange der Istwert der Netzspannung den ersten oberen Grenzwert (U1) überschreitet oder den ersten unteren Grenzwert (U3) unterschreitet, wobei der Sollwert der elektrischen Blindgröße vergrößert oder verkleinert wird, bis der Sollwert einen Maximalwert (Qmax) oder einen Minimalwert (Qmin) erreicht hat, und
- der Sollwert für die elektrische Blindgröße wird auf einen zeitlich konstanten Wert gesetzt, wenn der Istwert der Netzspannung den ersten oberen Grenzwert (U1) wieder unterschreitet und/oder den ersten unteren Grenzwert (U3) wieder überschreitet, wobei dann, wenn der Istwert der Spannung den zweiten unteren Grenzwert (U2) unterschreitet oder den zweiten oberen Grenzwert (U4) überschreitet, der Sollwert für die elektrische Blindgröße zeitlich fortlaufend vergrößert oder verkleinert wird, solange bis ein erster bzw. zweiter vorbestimmter Sollwert für die elektrische Blindgröße erreicht wurde.

2. Verfahren nach Anspruch 1, **dadurch gekennzeichnet, dass** der erste obere Grenzwert (U1) der Netzspannung größer als der Sollwert (UN) oder gleich dem Sollwert (UN) für die Netzspannung ist.

3. Verfahren nach Anspruch 1 oder 2, **dadurch gekennzeichnet, dass** der erste untere Grenzwert (U3) der Netzspannung kleiner als der Sollwert (UN) oder gleich dem Sollwert (UN) der Netzspannung ist.

4. Verfahren nach einem der Ansprüche 1 bis 3, **dadurch gekennzeichnet, dass** der erste vorbestimmte Sollwert für die elektrische Blindgröße gleich dem zweiten vorbestimmten Sollwert für die elektrische Blindgröße ist.

5. Verfahren nach Anspruch 4, **dadurch gekennzeichnet, dass** der erste und zweite vorbestimmte Sollwert für die elektrische Blindgröße gleich Null ist.

6. Verfahren nach Anspruch 4, **dadurch gekennzeichnet, dass** der erste und zweite vorbestimmte Sollwert für die elektrische Blindgröße ein von Null verschiedener Sollwert für die elektrische Blindgröße ist.

7. Verfahren nach einem der Ansprüche 1 bis 6, **dadurch gekennzeichnet, dass** der zeitlich konstante Wert für die elektrische Blindgröße gleich dem aktuellen Sollwert der elektrischen Blindgröße beim Wiederüberschreiten des ersten unteren Grenzwerts (U3) bzw. Wiederunterschreiten des ersten oberen Grenzwerts (U1) ist.

8. Verfahren nach einem der Ansprüche 1 bis 7, **dadurch gekennzeichnet, dass**, wenn der Istwert der Netzspannung den zweiten unteren Grenzwert (U2) wieder überschreitet und/oder den zweiten oberen Grenzwert (U4) wieder unterschreitet, der Sollwert für die elektrische Blindgröße auf einen zeitlich konstanten Wert gesetzt wird.

9. Verfahren nach Anspruch 8, **dadurch gekennzeichnet, dass** der zeitlich konstante Wert für die elektrische Blindgröße gleich dem aktuellen Sollwert der elektrischen Blindgröße beim Wiederüberschreiten des zweiten unteren Grenzwerts (U2) bzw. Wiederunterschreiten des zweiten oberen Grenzwerts (U4) ist.

10. Verfahren nach einem der Ansprüche 1 bis 9, **dadurch gekennzeichnet, dass** der zweite untere Grenzwert (U2) der Netzspannung größer oder gleich dem ersten unteren Grenzwert (U3) der Netzspannung ist.

11. Verfahren nach einem der Ansprüche 1 bis 10, **dadurch gekennzeichnet, dass** der zweite obere Grenzwert (U4) der Netzspannung kleiner oder gleich dem ersten oberen Grenzwert (U1) der Netzspannung ist.

12. Verfahren nach einem der vorhergehenden Ansprüche, **dadurch gekennzeichnet, dass** die elektrische Blindgröße die erzeugte Blindleistung ist.

13. Verfahren nach einem der Ansprüche 1 bis 11, **dadurch gekennzeichnet, dass** die elektrische Blindgröße der erzeugte Blindstrom ist.

14. Verfahren nach einem der Ansprüche 1 bis 11, **dadurch gekennzeichnet, dass** die elektrische Blindgröße der Phasenwinkel der erzeugten Leistung ist.

15. Verfahren nach einem der Ansprüche 1 bis 11, **dadurch gekennzeichnet, dass** die elektrische Blindgröße der Leistungsfaktor der erzeugten Leistung ist.

16. Verfahren nach einem der Ansprüche 1 bis 15, **dadurch gekennzeichnet, dass** die Grenzwerte der Netzspannung einstellbar sind.

## Claims

1. Method of operating a wind energy system, with a control for a reactive electric variable which is to be provided, wherein a desired value for the reactive electric variable is determined as follows:
• for the grid voltage, a first upper and/or a first lower limit value (U1, U3) of the grid voltage are defined, further a second lower limit value (U2) is defiled, which is lower than or equal to the first upper limit value (U1) and/or a second upper limit value (U4) is defined, which is higher than or equal to the first lower limit value (U3),
• when the actual value of the grid voltage exceeds the first upper limit value (U1), or the actual value of the grid voltage falls below the first lower limit value (U3), the desired value of the reactive electric variable is increased or decreased such that the deviation of the actual value of the grid voltage from its nominal value is counteracted,
• the desired value of the reactive electric variable is continuously increased or decreased further over time, for as long as the actual value of the grid voltage exceeds the first upper limit value (U1) or stays below the first lower limit value (U3), wherein the desired value of the reactive electric variable is increased or decreased until the desired value has reached a maximum value (Qₘₐₓ) or a minimum value (Qₘᵢₙ) and
• the desired value for the reactive electric variable is set to a value which is constant over time when the actual value of the grid voltage falls below the first upper desired value (U1) again, and/or exceeds the first lower desired value (U3) again, wherein when the actual value of the grid voltage falls below the second lower limit value (U2) or exceeds the second upper limit value (U4), the desired value of the reactive electric variable is continuously increased or decreased over time, for so long until a first or respectively second predetermined desired value for the reactive electric variable has been reached.

2. Method according to claim 1, **characterized in that** the first upper limit value (U1 of the grid voltage is higher than the nominal value (UN) or equal to the nominal value (UN) for the grid voltage.

3. Method according to claim 1 or 2, **characterized in that** the first lower limit value (U3) of the grid voltage is lower than the nominal value (UN) or equal to the nominal value (UN) of the grid voltage.

4. Method according to any one of claims 1 to 3, **characterized in that** the first predetermined desired value for the reactive electric variable is equal to the second predetermined desired value for the reactive electric variable.

5. Method according to claim 4, **characterized in that** the first and the second predetermined desired value for the reactive electric variable is zero.

6. Method according to claim 4, **characterized in that** the first and the second predetermined desired value for the reactive electric variable is a desired value for the reactive electric variable different from zero.

7. Method according to any one of claims 1 to 6, **characterized in that** the value which is constant over time for the reactive electric variable is equal to the actual desired value of the reactive electric variable when exceeding the first lower limit value (U3) again or falling below the first upper limit value (U1) again, respectively.

8. Method according to any one of claims 1 to 7, **characterized in that** when the actual value of the grid voltage exceeds the second lower limit value (U2) again, and/or falls below the second upper limit value (U4) again, the desired value for the reactive electric variable is set to a value which is constant over time.

9. Method according to claim 8, **characterized in that** the value which is constant over time for the reactive electric variable is equal to the actual desired value of the reactive electric variable when exceeding the second lower limit value (U2) again or falling below the second upper limit value (U4) again, respectively.

10. Method according to any one of claims 1 to 9, **characterized in that** the second lower limit value (U2) of the grid voltage is greater than or equal to the first lower limit value (U3) of the grid voltage.

11. Method according to any one of claims I to 10, **characterized in that** the second upper limit value (U4) of the grid voltage is smaller than or equal to the first upper limit value (U1) of the grid voltage.

12. Method according to any one of the preceding claims, **characterized in that** the reactive electric variable is the generated reactive power.

13. Method according to any one of claims I to 11, **characterized in that** the reactive electric variable is the generated reactive current.

14. Method according to any one of claims 1 to 11, **characterized in that** the reactive electric variable is the phase angle of the generated power.

15. Method according to any one of claims 1 to 11, **characterized in that that** the reactive electric variable is the power factor of the generated power.

16. Method according to any one of claims 1 to 15, **characterized in that** the limit values of the grid voltage arc adjustable.

## Revendications

1. Procédé d'exploitation d'une éolienne, comprenant une commande d'une grandeur électrique réactive devant être mise à disposition, dans lequel une valeur de consigne pour la grandeur électrique réactive est déterminée de la manière suivante :
- une première valeur limite supérieure et/ou une première valeur limite inférieure (U1, U3) de la tension du réseau sont définies pour la tension du réseau, une seconde valeur limite inférieure (U2) qui est inférieure ou égale à la première valeur limite supérieure (nul) et/ou une seconde valeur limite supérieure (ut) qui est supérieure ou égale à la première valeur limite inférieure (U3) sont en outre définies,
- lorsque la valeur réelle de la tension du réseau dépasse la première valeur limite supérieure (U1) ou la valeur réelle de la tension du réseau dépasse par le bas la première valeur limite inférieure (U3), la valeur de consigne de la grandeur électrique réactive est augmentée ou diminuée de telle sorte que l'écart entre la valeur réelle de la tension du réseau et sa valeur nominale est contrecarré,
- la valeur de consigne de la grandeur électrique réactive est davantage augmentée ou diminuée de manière continue dans le temps tant que la valeur réelle de la tension du réseau dépasse la première valeur limite supérieure (U1) ou dépasse par le bas la première valeur limite inférieure (U3), dans lequel la valeur de consigne de la grandeur électrique réactive est augmentée ou diminuée jusqu'à ce que la valeur de consigne ait atteint une valeur maximale (Qmax) ou une valeur minimale (Qmin), et
- la valeur de consigne pour la grandeur électrique réactive est fixée à une valeur constante dans le temps lorsque la valeur réelle de la tension du réseau dépasse de nouveau par le bas la première valeur limite supérieure (U1) ct/ou dépasse de nouveau la première valeur limite inférieure (U3), dans lequel la valeur de consigne pour la grandeur électrique réactive est ensuite augmentée ou diminuée de manière continue dans le temps lorsque la valeur réelle de la tension dépasse par le bas la seconde valeur limite inférieure (U2) ou dépasse la seconde valeur limite supérieure (U4) jusqu'à ce qu'une première ou seconde valeur de consigne prédéterminée ait été atteinte pour la grandeur électrique réactive.

2. Procédé selon la revendication 1, **caractérisé en ce que** la première valeur limite supérieure (U1) de la tension du réseau est supérieure à la valeur nominale (UN) ou égale à la valeur nominale (UN) pour la tension du réseau.

3. Procédé selon la revendication 1 ou 2, **caractérisé en ce que** la première valeur limite inférieure (U3) de la tension du réseau est inférieure à la valeur de consigne (UN) ou égale à la valeur de consigne (UN) de la tension du réseau.

4. Procédé selon l'une quelconque des revendications 1 à 3, **caractérisé en ce que** la première valeur de consigne prédéterminée pour la grandeur électrique réactive est égale à la seconde valeur de consigne prédéterminée pour la grandeur électrique réactive.

5. Procédé selon la revendication 4, **caractérisé en ce que** la première et seconde valeur de consigne prédéterminée pour la grandeur électrique réactive est égale à zéro.

6. Procédé selon la revendication 4, **caractérisé en ce que** la première et seconde valeur de consigne prédéterminée pour la grandeur électrique réactive est une valeur de consigne non nulle pour la grandeur électrique réactive.

7. Procédé selon l'une quelconque des revendications 1 à 6, **caractérisé en ce que** la valeur constante dans le temps pour la grandeur électrique réactive est égale à la valeur de consigne actuelle de la grandeur électrique réactive lors du nouveau dépassement de la première valeur limite inférieure (U3) ou du nouveau dépassement par le bas de la première valeur limite supérieure (U1).

8. Procédé selon l'une quelconque des revendications 1 à 7, **caractérisé en ce que** la valeur de consigne pour la grandeur électrique réactive est fixée à une valeur constante dans le temps lorsque la valeur réelle de la tension du réseau dépasse de nouveau la seconde valeur limite inférieure (U2) et/ou dépasse de nouveau par le bas la seconde valeur limite supérieure (U4).

9. Procédé selon la revendication 8, **caractérisé en ce que** la valeur constante dans le temps pour la grandeur électrique réactive est égale à la valeur de consigne actuelle de la grandeur électrique réactive lors du nouveau dépassement de la seconde valeur limite inférieure (U2) ou du nouveau dépassement par le bas de la seconde valeur limite supérieure (U4).

10. Procédé selon l'une quelconque des revendications 1 à 9, **caractérisé en ce que** la seconde valeur limite inférieure (U2) de la tension du réseau est supérieure ou égale à la première valeur limite inférieure (U3) de la tension du réseau.

11. Procédé selon l'une quelconque des revendications 1 à 10, **caractérisé en ce que** la seconde valeur limite supérieure (U4) de la tension du réseau est inférieure ou égale à la première valeur limite supérieure (U1) de la tension du réseau.

12. Procédé selon l'une quelconque des revendications précédentes, **caractérisé en ce que** la grandeur électrique réactive est la puissance réactive générée.

13. Procédé selon l'une quelconque des revendications 1 à 11, **caractérisé en ce que** la grandeur électrique réactive est le courant déwatté généré.

14. Procédé selon l'une quelconque des revendications 1 à 11, **caractérisé en ce que** la grandeur électrique réactive est l'angle de phase de la puissance générée.

15. Procédé selon l'une quelconque des revendications 1 à 11, **caractérisé en ce que** la grandeur électrique réactive est le facteur de puissance de la puissance générée.

16. Procédé selon l'une quelconque des revendications 1 à 15, **caractérisé en ce que** les valeurs limites de la tension du réseau sont réglables.
